# EUROPEAN PATENT APPLICATION

(11) **EP 4 757 341 A1**
(43) Date of publication of application: **10.06.2026**
(21) Application number: 24217794.7
(22) Date of filing: 05.12.2024
(51) Int. Cl.: H04R 1/02, B60Q 3/64, H04R 1/34

(54) **LOUDSPEAKER ARRANGEMENT**

(71) Applicant: Harman Becker Automotive Systems, Inc., Novi, MI 48377 (US)
(72) Inventor: JEPSEN, Henrik Kirkeby, Novi, MI, 48377 (US)
(74) Representative: Westphal, Mussgnug & Partner, Patentanwälte mbB

(57) **Abstract**

A loudspeaker arrangement comprises a loudspeaker (110) including a diaphragm to transmit an audio output, at least one light source (130), and an acoustic lens (120) coupled to the loudspeaker (110) and defining a first opening to enable the first audio output to pass from the first opening at a first predetermined angle, wherein the acoustic lens (120) comprises at least one first light guide (122) extending through the first opening, each light source (130) of the at least one light source (130) is coupled to at least one of the at least one first light guide (122) such that light emitted by a light source (130) is internally reflected along the respective at least one first light guide (122), and each light guide (122) of the at least one first light guide (122) comprises a plurality of extraction elements arranged successively along a length of the light guide (122), each of the plurality of extraction elements configured to direct light emitted by a respective one of the at least one light source (130) and internally reflected along the respective at least one first light guide (122) in a direction away from the loudspeaker (110).

## Description

### TECHNICAL FIELD

The disclosure relates to a loudspeaker arrangement, in particular to a loudspeaker arrangement comprising an illuminated loudspeaker.

### BACKGROUND

Loudspeakers are used for generating and emitting acoustic sound waves. This is mainly achieved by causing movements of a movable diaphragm by means of a voice coil connected to the diaphragm. Furthermore, there is an increasing need to provide loudspeakers which are illuminated with light. For an illumination of a loudspeaker using light sources provided at or in the speaker, it has to be made sure that the space requirements are not greatly increased when a light source is added to the loudspeaker, especially when the loudspeaker is installed in a vehicle, where limited space is available.

There is a need for a loudspeaker arrangement that is effectively illuminated, which has small space requirements, and can be produced easily and at low costs.

### SUMMARY

The loudspeaker arrangement according to the various embodiments described herein is effectively illuminated. Light that is emitted by at least one light source integrated into the loudspeaker arrangement can be enhanced and intensified in a simple and cost effective way. Further, the light emitted by the light source integrated into the loudspeaker can be directed towards defined directions. Even further, it is possible to create defined light patterns which may change over time.

A loudspeaker arrangement is disclosed herein. The loudspeaker arrangement includes a loudspeaker including a diaphragm to transmit an audio output, at least one light source, and an acoustic lens coupled to the loudspeaker and defining a first opening to enable the first audio output to pass from the first opening at a first predetermined angle, wherein the acoustic lens includes at least one first light guide extending through the first opening, each light source of the at least one light source is coupled to at least one of the at least one first light guide such that light emitted by a light source is internally reflected along the respective at least one first light guide, and each light guide of the at least one first light guide includes a plurality of extraction elements arranged successively along a length of the light guide, each of the plurality of extraction elements configured to direct light emitted by a respective one of the at least one light source and internally reflected along the respective at least one first light guide in a direction away from the loudspeaker.

Other systems, features and advantages of the disclosure will be or will become apparent to one with skill in the art upon examination of the following detailed description and figures. It is intended that all such additional systems, methods, features and advantages included within this description be within the scope of the invention and be protected by the following claims.

### BRIEF DESCRIPTION OF THE DRAWINGS

The arrangements and methods may be better understood with reference to the following description and drawings. The components in the figures are not necessarily to scale, emphasis instead being placed upon illustrating the principles of the invention. Moreover, in the figures, the same reference numerals designate the same components throughout the different views.
Figure 1 schematically illustrates a three-dimensional exploded view of a loudspeaker arrangement according to embodiments of the disclosure.
Figure 2 schematically illustrates a three-dimensional exploded view of a loudspeaker arrangement according to further embodiments of the disclosure.
Figure 3 schematically illustrates a cross-sectional view of a loudspeaker arrangement according to embodiments of the disclosure.
Figure 4 schematically illustrates a top view of elements of a loudspeaker arrangement according to further embodiments of the disclosure.
Figure 5 schematically illustrates a top view of elements of a loudspeaker arrangement according to even further embodiments of the disclosure.
Figure 6 schematically illustrates a three-dimensional exploded view of a loudspeaker arrangement according to even further embodiments of the disclosure.
Figure 7 schematically illustrates a cross-sectional view of a loudspeaker arrangement according to embodiments of the disclosure.
Figure 8 schematically illustrates a three-dimensional view of elements of a loudspeaker arrangement according to embodiments of the disclosure.

### DETAILED DESCRIPTION

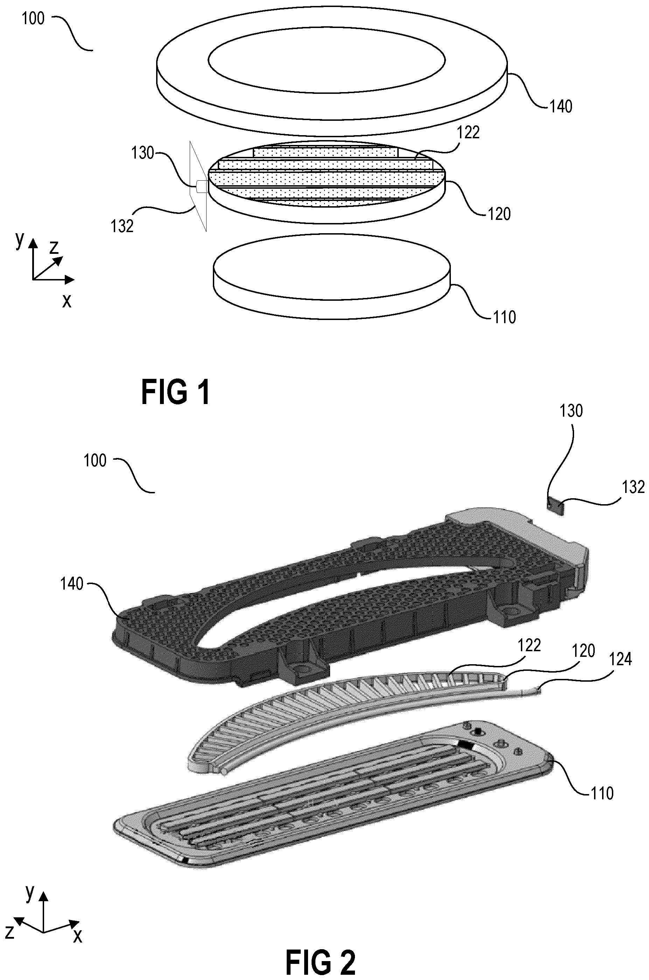

Figure 1 schematically illustrates a three-dimensional exploded view of a loudspeaker arrangement 100 according to embodiments of the disclosure. The loudspeaker arrangement 100 comprises a loudspeaker 110 including a diaphragm to transmit an audio output, at least one light source 130, and an acoustic lens 120 coupled to the loudspeaker 110 and defining a first opening to enable the first audio output to pass from the first opening at a first predetermined angle. The acoustic lens 120 comprises at least one first light guide 122 extending through the first opening. Each light source 130 of the at least one light source 130 is coupled to at least one of the at least one first light guide 122 such that light emitted by a light source 130 is internally reflected along the respective at least one first light guide 122, and each light guide 122 of the at least one first light guide 122 comprises a plurality of extraction elements arranged successively along a length of the light guide 122, each of the plurality of extraction elements configured to direct light emitted by a respective one of the at least one light source 130 and internally reflected along the respective at least one first light guide 122 in a direction away from the loudspeaker 110.

In the example illustrated in Figure 1, the loudspeaker arrangement 100 comprises a single (exactly one, not more than one) light source 130. According to some examples, light emitted by a light source 130 may be directly coupled into one or more first light guides 122 of the at least one light guide 122. This may be possible depending on the specific arrangement of the first light guides 122 with respect to the first opening and with respect to the light source 130. In the example illustrated in Figure 1, the acoustic lens 120 comprises a plurality of first light guides 122 extending in parallel to each other through the first opening. That is, first ends of the different light guides 130 are arranged distant from each other, wherein the first ends are those ends of the first light guides 122, where light enters the first light guides 122. In such cases, one or more additional elements may be required in order to guide light emitted by the light source 130 to each first light guide 122 of the one or more light guides 122. This will be described in more detail with respect to Figures 2, 3 and 4 below.

Each first light guide 122 of the at least one first light guide 122 may be a conventional light guide. Different implementations of light guides are generally known. A light guide generally is a device that is used to direct light from a light source to one or more places where the light is required. Light guides are usually made of glass or plastic, which typically have an index of refraction of about 1.5. Light that is injected into the light guide at a defined angle is trapped within the light guide due to a phenomenon often referred to as internal reflection or TIR. Once trapped, the light remains inside the light guide until it is extracted by means of one or more extraction elements. Using light guides, it is possible to guide light from one end of a light guide to another end, or to extract the light along the length of the light guide. The light may be extracted in specific directions. This makes the light guide, or parts of the light guide, appear lit. The extraction may be achieved by arranging extraction elements along the length of a light guide (e.g., paint dots, or textures such as prisms, bumps, or holes) that influence the way of the reflected light, breaking the TIR condition and causing light to exit the light guide.

By integrating one or more first light guides 122 into an acoustic lens 120, the acoustic lens 120 appears to be lit. As mentioned, light guides are generally made of glass, plastic or any other rigid and transparent materials that are suitable to function as a light guide. That is, the first light guides 122 may not only illuminate the loudspeaker, but also function as parts of the acoustic lens, directing sound emitted by the loudspeaker 110 in desired directions.

The light emitted by the one or more first light guides 122 may be static. That is, a color and brightness of the light may not change. It is, however, also possible that the color and/or brightness of the light emitted by at least one of the one or more first light guides 122 can be altered. By changing the color and/or brightness of the light emitted by some or all of the at least one first light guides 122, different patterns may be generated. According to some examples, patterns may change in accordance with an audio output generated by means of the loudspeaker 110. For example, patterns may change in accordance with a rhythm, tempo and/or volume of the audio output generated by means of the loudspeaker 110.

The acoustic lens 120 implemented in connection with the loudspeaker arrangement may change a directivity of the loudspeaker 110 to match or achieve a desired audio experience. Acoustic lenses may generally have any suitable shape and design. Loudspeakers are generally used for generating and emitting acoustic sound waves. This is mainly achieved by causing movements of a movable diaphragm by means of a voice coil connected to the diaphragm. The loudspeaker 110 of the loudspeaker arrangement 100 according to the different embodiments disclosed herein may generally be implemented in any suitable way.

There is an increasing need to provide loudspeakers which are illuminated with light. For an illumination of a loudspeaker using one or more light sources provided at or in the loudspeaker, it has to be made sure that the space requirements are not greatly increased when one or more light sources are added to the loudspeaker, especially when the loudspeaker is installed in a vehicle, where limited space is available. According to some examples, the loudspeaker 110 may be a comparably flat loudspeaker. Flat loudspeakers can be integrated in applications where space is critical, e.g., in vehicles, or in-wall mounted loudspeakers. The illuminated acoustic lens 120 of the loudspeaker arrangements 100 disclosed herein provides an effective way of illuminating a loudspeaker (e.g., a flat loudspeaker), even if only little space is available.

Referring to Figures 2, 3 and 4, the loudspeaker arrangement 100 may further comprise a second light guide 124, arranged between the at least one light source 130 and each of the at least one first light guide 122. The second light guide 124 comprises a plurality of extraction elements arranged successively along a length of the second light guide 124. Each extraction element of the at least one extraction element is configured to direct light emitted by the at least one light source 130 and internally reflected along the second light guide 124 into a different one of the at least one first light guide 122. This allows to distribute light from a single light source 130 to more than one first light guide 122. Within each of the at least one first light guide 130, the light is then extracted by means of one or more extraction elements. For example, a plurality of extraction elements may be arranged successively along a length of each first light guide 122 of the at least one first light guide 122. In this way, each of the at least one first light guide 122 may appear lit along its entire length. Alternatively, it is however also possible that extraction elements are only arranged in some sections of a first light guide 122, such that the respective first light guide 122 appears only partly lit.

Each light source 130 of the at least one light source 130 may comprise at least one light emitting diode, LED. Each light source 130 of the at least one light source 130 may have a defined color, e.g., white, blue, red, yellow, green, purple, etc. It is, however, also possible that at least one light source 130 of the at least one light source 130 is configured to change its color in response to a respective control signal. According to one example, at least one light source 130 of the at least one light source 130 comprises a so-called RGB-LED. RGB-LEDs are a type of LED that can emit a wide variety of colors. RGB-LEDs are commonly known and will not be described in further detail herein. Alternatively or additionally, at least one light source 130 of the at least one light source 130 is dimmable.

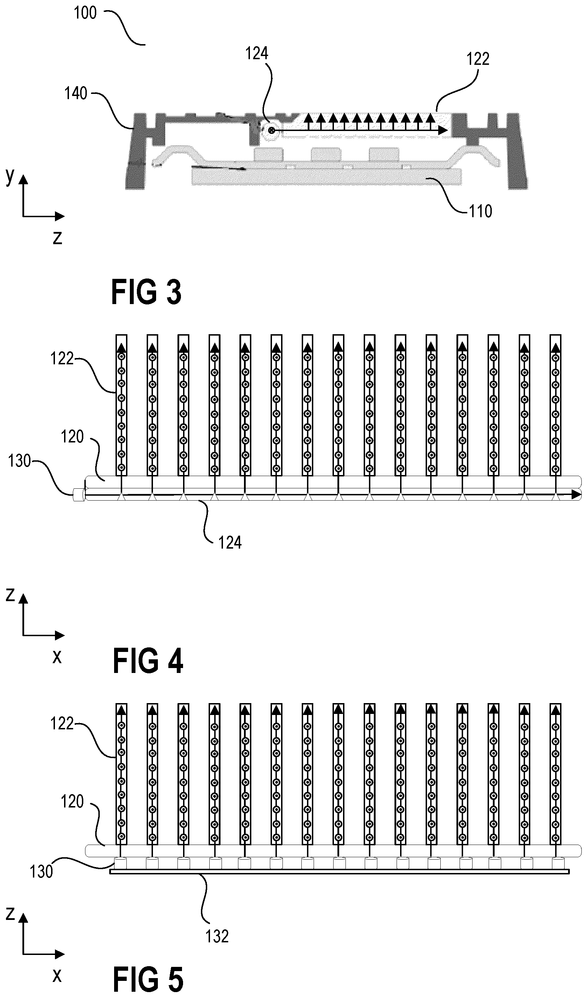

In the example illustrated in Figures 2, 3 and 4, all first light guides 122 of the at least one first light guide 122 are illuminated in the same color, the color depending on the color of the light emitted by the single light source 130 coupled to the second light guide 124. Further, the intensity of the light emitted by each of the at least one first light guide 122 is essentially the same. Figure 2 schematically illustrates a three-dimensional exploded view of a loudspeaker arrangement according to embodiments of the disclosure. Figure 3 schematically illustrates a cross-sectional view of the loudspeaker arrangement of Figure 2, and Figure 4 schematically illustrates a top view of elements of a loudspeaker arrangement according to embodiments of the disclosure. In Figure 4 the arrows indicate the light guided inside the respective first light guides 122 and the second light guide 124, and the circles indicate positions of extraction elements where light exits the respective first light guides 122. The light source 130 may be arranged on a printed circuit board, PCB, 132, for example. A respective driving circuitry for the light source 130 may be provided on the PCB 132.

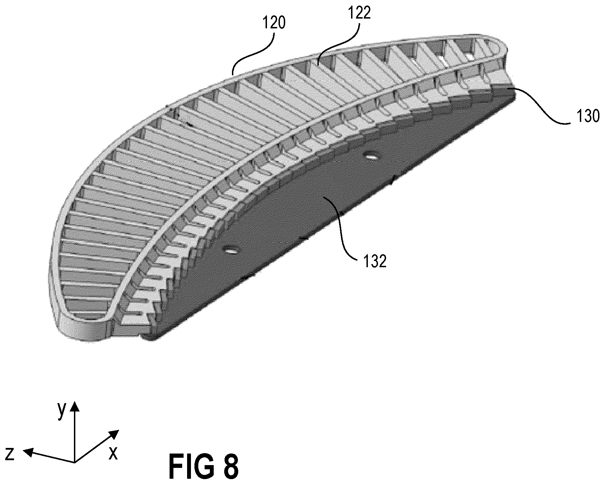

Now referring to Figures 5, 6, 7 and 8, according to an alternative embodiment, the loudspeaker arrangement 100 comprises a plurality of first light guides 122, and a plurality of light sources 130, each light source 130 of the plurality of light sources 130 arranged to emit light into a subset of the plurality of first light guides 122. In the examples specifically illustrated herein, the number of first light guides 122 equals the number of light sources 130. That is, each light source 130 of the plurality of light sources 130 is directly coupled to a different one of the plurality of first light guides 122. Each light source 130 of the plurality of light sources 130 may emit light of the same color and/or intensity as the other light sources 130 of the plurality of light sources 130. It is, however, also possible that different light sources 130 emit light of different color and/or intensity. It is also possible that light sources 130 are switched on and off according to specific patterns. That is, at one point, a subset of the light sources 130 may be switched on, while another subset of the light sources 130 is switched off. In this way, different light patterns may be achieved. The different light sources 130 may change the color and/or intensity of the emitted light over time and/or may be switched on an off at specific times. In this way, constantly changing light patterns can be created.

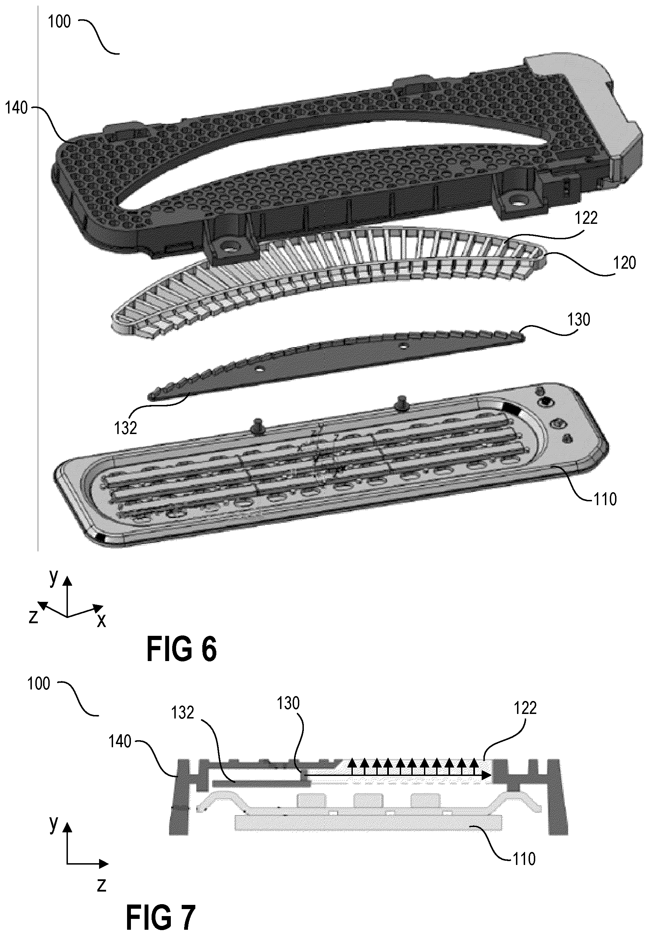

As is exemplarily illustrated in Figures 6, 7 and 8, the loudspeaker arrangement 100 may further comprise a printed circuit board, PCB, 132, wherein each light source 130 of the plurality of light sources 130 is attached to the PCB 132. A respective driving circuitry for the plurality of light sources 130 may be provided on the PCB 132.

The loudspeaker arrangements illustrated in the figures and described above, however, are only examples. It is also possible, for example, that the different embodiments of Figures 2 to 4 and 5 to 8 be combined with each other. That is, for example, each light source 130 of a plurality of light sources 130 may be coupled to one or more, but not all, first light guides 122 of a plurality of first light guides 122 by means of a different one of a plurality of second light guides 124. That is, one or more, but not all, first light guides 122 of a plurality of light guides 122 may be illuminated by means of one of a plurality of light sources 130.

Still referring to the figures, the loudspeaker arrangement 100 according to some embodiments may further comprise a carrier 140. The acoustic lens 120 may be coupled to the loudspeaker 110 by means of the carrier 140. For example, the carrier 140 may comprise an opening, and the acoustic lens 120 may be arranged at least partly within the opening formed in the carrier 140. The loudspeaker 110 may be arranged behind the carrier 140 and the acoustic lens 120 and may not be directly visible for a user of the loudspeaker arrangement 100.

Each extraction element of the plurality of extraction elements arranged successively along a length of the at least one first light guide 122 and optionally along the length of at least one second light guide 124 may comprise or consist of a prism, a micro-lens array, a micro-structure, or an optical pattern, for example. Different types of extraction elements for light guides are generally known. According to some examples, the type of extraction elements in the at least one first light guide 122 and optionally the at least one second light guide 124 may depend on the specific implementation of the loudspeaker arrangement 100. For example, if a layer of fabric is arranged in front of the loudspeaker arrangement 100 (layer of fabric visible for a user of the loudspeaker arrangement), three-dimensional extraction elements may be used (e.g., textures such as prisms, bumps or holes). The size of three-dimensional extraction elements (e.g., textures such as prisms, bumps or holes) may increase along the length of the respective first light guide 122.

If, for example, a loudspeaker grille is arranged in front of the loudspeaker arrangement 100 (loudspeaker grille visible for a user of the loudspeaker arrangement), two-dimensional extraction elements may be used (e.g., paint dots). According to some examples, the amount of paint that is used to form an extraction element may increase along the length of the respective first light guide 122.

The first opening defined by the acoustic lens 120 may generally have any suitable shape. According to some embodiments of the disclosure, the first opening may have a round shape, an oval shape, a rectangular shape, a square shape, a nephritic shape, or a semicircular shape. In the example illustrated in Figure 1, the first opening has a round shape. In the examples illustrated by means of figures 2 to 8, the first opening generally has a nephritic or semicircular shape, which is one out of several possible shapes. The one or more first light guides 122 may extend through the first opening in any suitable way. According to some examples, each first light guide 122 of a plurality of first light guides 122 is essentially parallel to each other first light guide 122 of the plurality of first light guides 122. According to other examples, the first ends of a plurality of first light guides 122 may be arranged closer to each other than their respective second ends, wherein the first end of a first light guide 122 is an end where the light emitted by the respective light source 130 enters the respective first light guide 122.

The loudspeaker arrangements according to the various embodiments disclosed herein may be integrated in a vehicle, for example. Loudspeaker arrangements according to the various embodiments disclosed herein may be integrated into a headliner or a door of a vehicle, for example. Illuminated loudspeakers according to the various embodiments disclosed herein, however, may also be implemented in any other suitable environments and applications. One or more first light guides 122 as well as one or more second light guides 124 can be easily integrated into or form acoustic lenses of any kind.

It may be understood, that the illustrated systems and methods are merely examples. While various embodiments of the invention have been described, it will be apparent to those of ordinary skill in the art that many more embodiments and implementations are possible within the scope of the invention. In particular, the skilled person will recognize the interchangeability of various features from different embodiments. Although these techniques and systems have been disclosed in the context of certain embodiments and examples, it will be understood that these techniques and systems may be extended beyond the specifically disclosed embodiments to other embodiments and/or uses and obvious modifications thereof. Accordingly, the invention is not to be restricted except in light of the attached claims and their equivalents.

The description of embodiments has been presented for purposes of illustration and description. Suitable modifications and variations to the embodiments may be performed in light of the above description or may be acquired from practicing the methods. The described arrangements are exemplary in nature, and may include additional elements and/or omit elements. As used in this application, an element recited in the singular and proceeded with the word "a" or "an" should be understood as not excluding plural of said elements, unless such exclusion is stated. Furthermore, references to "one embodiment" or "one example" of the present disclosure are not intended to be interpreted as excluding the existence of additional embodiments that also incorporate the recited features. The terms "first," "second," and "third," etc. are used merely as labels, and are not intended to impose numerical requirements or a particular positional order on their objects. The subject matter of the present disclosure includes all novel and non-obvious combinations and sub-combinations of the various systems and configurations, and other features, functions, and/or properties disclosed. The following claims particularly point out subject matter from the above disclosure that is regarded as novel and non-obvious.

## Claims

1. A loudspeaker arrangement (100) comprises:
a loudspeaker (110) including a diaphragm to transmit an audio output;
at least one light source (130); and
an acoustic lens (120) coupled to the loudspeaker (110) and defining a first opening to enable the first audio output to pass from the first opening at a first predetermined angle, wherein
the acoustic lens (120) comprises at least one first light guide (122) extending through the first opening,
each light source (130) of the at least one light source (130) is coupled to at least one of the at least one first light guide (122) such that light emitted by a light source (130) is internally reflected along the respective at least one first light guide (122), and
each light guide (122) of the at least one first light guide (122) comprises a plurality of extraction elements arranged successively along a length of the light guide (122), each of the plurality of extraction elements configured to direct light emitted by a respective one of the at least one light source (130) and internally reflected along the respective at least one first light guide (122) in a direction away from the loudspeaker (110).

2. The loudspeaker arrangement (100) of claim 1, wherein each light source (130) of the at least one light source (130) comprises at least one light emitting diode, LED.

3. The loudspeaker arrangement (100) of claim 1 or 2, wherein at least one light source (130) of the at least one light source (130) is configured to change its color and/or its intensity in response to a respective control signal.

4. The loudspeaker arrangement (100) of claim 1, 2 or 3, wherein each extraction element of the plurality of extraction elements arranged successively along a length of the at least one first light guide (122) comprises or consist of a prism, a micro-lens array, a micro-structure, a paint dot, or an optical pattern.

5. The loudspeaker arrangement (100) of any of claims 1 to 4, further comprising a second light guide (124), wherein the second light guide (124) is arranged between the at least one light source (130) and each of the at least one first light guide (122), and comprises a plurality of extraction elements arranged successively along a length of the second light guide (124), each extraction element of the at least one extraction element configured to direct light emitted by the at least one light source (130) and internally reflected along the second light guide (124) into a different one of the at least one first light guide (122).

6. The loudspeaker arrangement (100) of any of claims 1 to 4, wherein the loudspeaker arrangement (100) comprises a plurality of first light guides (122), and a plurality of light sources (130), each light source (130) of the plurality of light sources (130) arranged to emit light into a subset of the plurality of first light guides (122).

7. The loudspeaker arrangement (100) of claim 6, further comprising a printed circuit board, PCB, (132) wherein each light source (130) of the plurality of light sources (130) is attached to the PCB (132).

8. The loudspeaker arrangement (100) of any of the preceding claim, further comprising a carrier (140), wherein the acoustic lens (120) is coupled to the loudspeaker (110) by means of the carrier (140).

9. The loudspeaker arrangement (100) of any of the preceding claims, wherein the first opening defined by the acoustic lens (120) has a round shape, an oval shape, a rectangular shape, a square shape, a nephritic shape, or a semicircular shape.

10. A vehicle comprising the loudspeaker arrangement (100) of any of claims 1 to 9.
